# EUROPEAN PATENT SPECIFICATION

(11) **EP 3 220 504 B1**
(45) Date of publication and mention of the grant of the patent: **27.11.2019**
(21) Application number: 16160689.2
(22) Date of filing: 16.03.2016
(51) Int. Cl.: H02J 3/38, F03D 7/02, H02P 13/00

(54) **METHOD TO START-UP A WIND TURBINE**
VERFAHREN ZUM STARTEN EINER WINDTURBINE
PROCÉDÉ POUR DÉMARRER UNE TURBINE ÉOLIENNE

(43) Date of publication of application: 20.09.2017
(73) Proprietor: Siemens Gamesa Renewable Energy A/S, 7330 Brande (DK)
(72) Inventor: Bech, John, 8450 Hammel (DK)
(74) Representative: Aspacher, Karl-Georg

(56) References cited:
- EP-A1- 2 645 530
- NAGPAL M ET AL: "Assessing and Limiting Impact of Transformer Inrush Current on Power Quality", IEEE TRANSACTIONS ON POWER DELIVERY, IEEE SERVICE CENTER, NEW YORK, NY, US, vol. 21, no. 2, 1 April 2006 (2006-04-01), pages 890-896, XP001546369, ISSN: 0885-8977, DOI: 10.1109/TPWRD.2005.858782

## Description

This invention deals with a method to start-up a wind turbine, which is in a so called "Island Mode Operation (IMO)".

The "Island Mode Operation (IMO)" addresses a wind turbine (or wind turbines of a wind farm), which is not connected to an (external) electrical power grid of a grid operator.

This might be the case if the connection between the completed wind farm or completed wind turbine and the external electrical grid is still under construction.

The Island Mode Operation might be needed if failures in export cables, which connect the wind turbines of the wind farm with the electrical grid, occur.

Another reason for the Island Mode Operation might be that an "HVDC station", which might be used to connect offshore turbines of a wind farm with the electrical grid onshore, might not be ready for a transfer of electrical power due to control reasons or the like.

Another reason for Island Mode Operation might be that the connection between wind farm or wind turbines with the external electrical grid is cut-off due to grid-disturbances.

Wind turbines in Island Mode Operation still need a certain amount of energy or power even if there is no electrical grid available for delivery of this energy or power.

It is known to energize wind turbines, which are in Island Mode Operation, and their components by a generator (e.g. by a Diesel-generator), which is used as power source.

This (Diesel-) generator is not a functional part of the wind turbine itself, it is a part of the wind farm for example.

It is even known to energize a given wind turbine, which is in Island Mode Operation, by power, which is generated by another wind turbine.

The respective electrical power, which is used to energize the IMO-wind turbine, might be needed for auxiliary equipment of the wind turbine.

It might be needed e.g. to move bearings of the wind turbine or to perform an automated lubrication of the bearings.

It might be needed for operating a heat-and-cooling system, which is used for the reduction of moisture inside the wind turbine.

It might even be needed to operate aviation warning lights or to activate and maintain the operation of measurement equipment of the wind turbine.

It has been observed that a start-up of IMO-wind turbines, which is done by an external power source like a Diesel-generator, is very demanding.

According to a rule of thumb a respective Diesel-generator should be of the same size or capability as the transformer, which needs to be energized as well as the auxiliary equipment by the Diesel-generator. This requirement results in a quite huge Diesel-generator.

This kind of a Diesel-generator is expensive, especially for offshore installations. Additional costs would be caused by the available but limited space, which is needed for the volume of the Diesel-generator.

Due to the costs it is quite common to use a smaller Diesel-generator for energizing wind turbines of an offshore wind farm: while a typical transformer of the wind turbine might show a capacity of 4.0 MVA an allocated Diesel-generator might typically show a capability of 500 kVA only.

Energizing a wind turbine of a wind farm, which is in Island Mode Operation, is typically done according to this sequence:
1. Start Diesel-generator,
2. Ramp up the voltage at the Diesel-generator,
3. Energize the wind turbine (or one or more wind turbines of a limited part of the wind farm),
4. Start-up the wind turbine (or the respective number of wind turbines), thus the transformer of the wind turbine is energized and at least components of the wind turbine (e.g. the auxiliary equipment) are energized via the transformer,
5. Supply energy or power to remaining wind turbines of the wind farm for their energizing (while the energy or power might be produced by the Diesel-generator or might be supplied by the wind turbine, which was energized before - for this purpose respective transfer cables and transformers are to be connected accordingly).

This start-up sequence was made as an example using a Diesel-generator. Another power source, like an operating wind turbine, might be applied for this purpose as well.

The respective start-up of wind turbines as described above might lead to tripping effects in the wind farm turbines. The tripping is caused by high saturation currents, which needs to be induced in the respective transformers of the wind turbines.

The value of the saturation currents depend on the instantaneous switching of a sinus-curved voltage in the transformer transformer and even depend on the level of a residual (magnetic) flux, which is present in the transformer.

Document EP 2 645 530 A1 describes a method for controlling a wind farm, which is connected to a grid. The wind farm comprises a wind farm emergency generator and at least a first wind turbine. The first wind turbine comprises a wind turbine transformer, a wind turbine converter and auxiliary equipment. According to the method a lost grid connection is connected. Active power is provided to the auxiliary equipment via the wind farm emergency generator and reactive power is provided via the wind turbine converter.

Document "Assessing and Limiting Impact of Transformer Inrush Current on Power Quality", by Mukesh Nagpal et al., XP-001546369, IEEE TRANSACTIONS ON POWER DELIVERY, VOL. 21, NO. 2, APRIL 2006, describes transformers and the transmission of electric power at high voltages over long distances.

It is therefore the aim of the invention, to provide an improved method for start-up a wind turbine, which is in Island Mode Operation, while the tripping effects as described above are reduced or even avoided.

This aim is solved by the features of claim 1. Preferred embodiments of the invention are addressed by the features of the dependent claims.

According to the method invented the transformer of the wind turbine is connected with a power source. The power source provides a pre-defined voltage to the transformer. The pre-defined voltage is ramped down to demagnetize the transformer. The wind turbine with the demagnetized transformer is subjected to a start-up sequence, which is used to provide power from the power source via the transformer to components (i.e. to auxiliary equipment) of the wind turbine.

In a preferred configuration a generator is used as power source. For example a Diesel-generator, which is part of a wind farm might be used.

The power source might even be another wind turbine, which is in operational mode, a power storage, etc, as well.

In a preferred configuration the pre-defined voltage, which is provided to the transformer, is ramped down until a certain demagnetizing of the transformer is reached.

It is understood that the feature "certain demagnetizing of the transformer" is defined by the capability of the power source, by the involved components and their capabilities as well as by the system design of the wind farm and the respective wind turbines and transformers.

In a preferred configuration the pre-defined voltage, which is provided by the power source for transformer-demagnetizing, has a value, which is comparable to that voltage used for building up the magnetized transformer in the subsequent start-up sequence.

In a preferred configuration the start-up sequence is done in accordance with this sequence of steps:
- the voltage of the power source, which is supplied to the wind turbine, is ramped up until a nominal voltage value is reached, while the transformer of the wind turbine is energized by the supplied voltage,
- components (e.g. the auxiliary equipment) of the wind turbine are energized by the supplied voltage of the power source, while the voltage is supplied via the transformer, and
- the components (e.g. the auxiliary equipment) of the wind turbine are operated.

In a preferred configuration a respective number of wind turbines of a wind farm are selected for the start-up sequence, which is applied after the demagnetization.

In a preferred configuration a respective number of wind turbines of a wind farm are selected for a joint demagnetization of the respective wind turbine transformers.

The number of those transformers, which are selected for being demagnetized, depend on the rating and on the capability of the power source. The number will even depend on the architecture of the wind turbine or wind farm and on the components used therein.

In a preferred configuration the wind turbine, which was energized first in accordance with the invention, is used to energize respective (other) wind turbines of a wind farm.

In a preferred configuration the wind turbine, which was energized first in accordance with the invention, is used to put respective other wind turbines of a wind farm in operational mode. Thus a connection of the wind turbines with an external electrical grid of a grid operator is prepared.

The invention allows using a cost-effective generator or Diesel-generator with a smaller volume in view to the prior art known.

The invention relies on the additional step, which is done before the start-up sequence as described above is initiated: the respective transformers, which are planned to be addressed by a start-up sequence, are demagnetized by a power source, e.g. by a generator.

For this purpose the voltage, which is provided by the power source (generator) to the transformer, is ramped down until the transformer is demagnetized to a certain extent.

The method invented results in a reduced residual flux in the transformer. The transformer is demagnetized before the start-up sequence is initialized.
Thus the transformer is equivalent to a "smaller" or "lower" electrical load seen by the power source (generator). Thus less power is needed from the power source (generator) for the subsequent start-up procedure.

The method invented effectively reduces saturation currents and/or inrush currents, which are caused in the transformer.

The invention is described in more detail by help of figures.
- FIG 1: shows an exemplary architecture of a wind farm, while the wind turbines of the wind farm might be started according to the method invented,
- FIG 2: shows the ramping-down of the voltage of the generator, which is used according to the method invented, and
- FIG 3: shows the respective demagnetization, which is caused by the ramp-down of the voltage.

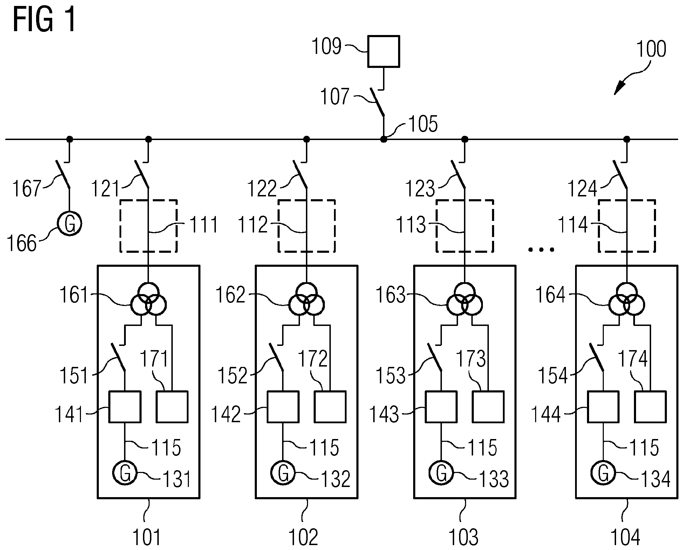

FIG 1 shows an exemplary architecture of a wind farm 100, while wind turbines 101, 102, 103 and 104 of the wind farm 100 are started according to the method invented.

Each wind turbine 101, 102, 103, 104 is connected via a respective cable 111, 112, 113, 114 and via a respective switch 121, 122, 123, 124 to a point of common connection 105.

This point of common connection 105 might be connected via a switch 107 to an electrical utility grid 109 of a grid operator.

In the section between the utility grid 109 and the point of common connection 105 one or more transformers might be arranged (not shown here), which might be used to transform a voltage, supplied by the wind turbines 101 - 104, to a higher voltage.

This section might even comprise so called "High Voltage DC" components, which are arranged and prepared to provide electrical power from the wind farm 100 to the utility grid 109.

Each of the wind turbines 101 - 104 comprises a respective generator 131 - 134, a converter 141 - 144, a switch 151 - 154, auxiliary equipment 171 - 174 and a transformer 161 - 164.

Each respective generator 131 - 134 might be driven by the wind, thus generating electrical power with a variable frequency.

This power with a variable frequency is provided to the respective converter 141 - 144 via a respective power line 115.

The respective power lines 115 may comprise additional switches (not shown) for a connection or de-connection of the respective generators with the respective converters.

The respective converter 141 - 144 converts the power, which is generated and provided by the respective generator 131 - 134, into electrical power with a fixed frequency.

The power with the fixed frequency is supplied via a respective switch 151 - 154 to a respective transformer 161, 162, 163, 164.

The respective transformer 161 - 164 provides transformed power via the respective cable 111 - 114 and via a respective switch 121 - 124 to the point of common connection 105.

For starting up the wind turbines 101 - 104 of the wind farm 100 in case of an Island Mode Operation (IMO) a Diesel-generator 166 can be connected via switch 167 with the point of common connection 105.

This Diesel-generator is a kind of wind-turbine-external power source in view to the single wind turbines and is a part of the wind farm 100.

In a normal operational mode of the wind turbines 101 - 104 of the wind farm 100 the electrical power would be provided from the point of common connection 105 and via the closed switch 107 to the utility grid 109. Accordingly switches 121 - 124 would be closed, while switch 167 would be open.

In case of an Island Mode Operation of the wind turbines 101 - 104 of the wind farm 100 the switch 107 would be open. Thus there would be no connection between the point of common connection 105 and the grid 109.

Even if the utility grid 109 is disconnected from the wind farm 100, the transformers 161 - 164 would be magnetized.

Thus an intended start-up of the IMO-wind turbines for preparing a (re-)connection with the utility grid would be counteracted.

According to the method invented a dedicated wind turbine 101 of the wind farm 100 is connected with the Diesel-generator 166 via closed switches 167 and 121.

The switches 122 - 124 are open thus the respective wind turbines 102 - 104 are not (yet) connected with the generator 166.

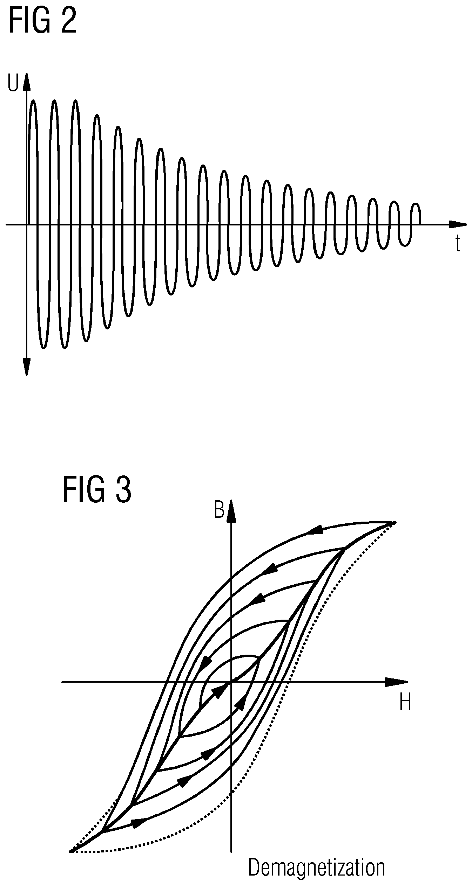

The Diesel-generator is started and provides a pre-defined voltage, as shown in more detail in FIG 2 below, via the closed switches 167 and 121 to the transformer 161 of the wind turbine 101.

The pre-defined voltage is ramped down by the generator 166 thus the transformer 161 is demagnetized until a certain demagnetizing of the transformer 161 is reached.

This sequence of demagnetizing might be repeated with the remaining transformers 162 - 164 of the wind turbines 102 - 104 respectively and in a step-by-step manner.

Due to the set of switches 167 and 121 - 124 every demagnetizing-sequence is allowed. Thus it could be done separately for every single transformer or in a grouped manner for a set of respective transformers.

After the demagnetizing-sequence of the transformers 161 - 164 is done the start-up of the wind turbines 101 - 104, which are in the Island Mode Operation, is started.

For example the switch 167 and the switch 121 are closed.

Thus the generator 166 is connected via the switches 167 and 121 with the wind turbine 101. The voltage of the generator 166 is ramped up until a nominal voltage value is reached.

The respective transformer 161 as well as auxiliary equipment 171 of the wind turbine 101 are energized by the generator 166 and are thus enabled for their operation.

The wind turbine 101 could now be started and operated, thus a certain amount of electrical power might be generated by the wind turbine 101.

This generated electrical power might be used to energize another wind turbine, i.e. the wind turbine 102. Thus switches 121 and 122 would be closed, while the switches 167 and 123 - 124 would be open.

If the start-up sequence is done for the wind turbines 101 - 104 of the wind farm 100 (with switches 121 - 124 being closed and switch 167 being open) the wind farm 100 could be connected via the switch 107 with the utility grid 109 finally.

FIG 2 shows the time-dependent ramping-down of the voltage of the generator 166, which is used for demagnetizing of the respective transformers 161 - 164 according to the method invented.

FIG 3 shows the respective demagnetization curve, which is caused by the ramp-down of the voltage.

The demagnetization process develops from a quite extended hysteresis-curve down to a quite small hysteresis-curve as indicated by the arrows.

## Claims

1. Method to start-up wind turbines (101, 102, ...), which are in an island mode operation, of a wind farm (100),
- wherein each wind turbine (101, 102, ...) is connected via a respective switch (121, 122, ...) with a point of common connection (105),
- wherein each wind turbine (101, 102, ...) comprises in series a generator (131, 132, ...) and a converter (141, 142, ...), which are connected via a switch (151, 152, ...) with a transformer (161, 162, ...), and auxiliary equipment (171, 172, ...), which is also connected with the transformer (161, 162, ...),
- wherein, for starting up the wind turbines, a diesel generator (166) can be connected via a switch (167) with the point of common connection (105) and wherein each wind turbine (101, 102, ...) of the wind farm (100) can be connected via a respective switch (121, 122, ...) with the point of common connection (105), thus the diesel generator (166) can be connected with each of the wind turbines (101, 102, ...) via the respective switches (121, 122, ...),
- wherein a dedicated first wind turbine (101) of the wind farm (100) is connected with the diesel generator (166) via closing the respective switches (167 and 121),
- wherein the diesel generator (166) is started and provides a pre-defined voltage via the closed respective switches (167 and 121) to the transformer (161) of the first wind turbine (101),
- wherein the pre-defined voltage is ramped down by the diesel generator (166) thus the transformer (161) of the first wind turbine (101) is demagnetized until a certain demagnetizing of the transformer (161) is reached,
- wherein this sequence of demagnetizing is repeated with the remaining transformers (162, 163, 164) of the remaining wind turbines (102, 103, 104) via respective switches (122, 123, 124),
- wherein, after the demagnetizing-sequence of the transformers (161, 162, ...) was applied, a start-up sequence of the wind turbines (101, 102, ...), is started in accordance to these steps:
- wherein the switches (167 and 121) between the diesel generator (166) and the transformer (161) of the dedicated first wind turbine (101) are closed while the switches (122, 123, 124) between the diesel generator (166) and the other transformers (162, 163, 164) are opened,
- wherein the voltage of the diesel generator (166) is ramped up until a nominal voltage value is reached,
- wherein the diesel generator (166) is connected via the respective switches (167, 121) with the first wind turbine (101), thus the converter (141) as well as the auxiliary equipment (171) of the first wind turbine (101) are energized by the diesel generator (166),
- wherein the first wind turbine (101) is started and operated, thus a certain amount of electrical power is generated by the first wind turbine (101),
- wherein this generated electrical power is used to energize other wind turbines (102, 103, 104) of the wind farm (100) via switching of the respective switches (122, 123, 124).

2. Method according to claim 1, wherein a respective number of wind turbines (101, 102, ...) of a wind farm (100) is selected for the start-up sequence, which is applied after the demagnetization.

3. Method according to claim 1, wherein a respective number of wind turbines (101, 102, ...) of a wind farm (100) is selected for a joint demagnetization of the respective wind turbine transformers (161, 162, ...).

4. Method according to claim 1, wherein the wind turbine is used to put respective wind turbines (101, 102, ...) of a wind farm (100) in operation thus a connection of the wind turbines (101, 102, ...) with an wind farm-external electrical grid (109) of a grid operator is prepared.

## Patentansprüche

1. Verfahren zum Starten von Windturbinen (101, 102, ...), die sich in einer Inselbetriebsart eines Windparks (100) befinden,
- wobei jede Windturbine (101, 102, ...) über einen jeweiligen Schalter (121, 122, ...) mit einem gemeinsamen Anschlusspunkt (105) verbunden ist,
- wobei jede Windturbine (101, 102, ...) in Reihe geschaltet einen Generator (131, 132, ..) und einen Umrichter (141, 142, ...) umfasst, die über einen Schalter (151 152, ...) mit einem Transformator (161, 162, ...) verbunden sind, und Zusatzeinrichtungen (171, 172, ...), die ebenfalls mit dem Transformator (161, 162, ...) verbunden sind,
- wobei zum Starten der Windturbinen ein Dieselgenerator (166) über einen Schalter (167) mit dem gemeinsamen Anschlusspunkt (105) verbunden werden kann, und wobei jede Windturbine (101, 102, ...) des Windparks (100) über einen jeweiligen Schalter (121, 122, ...) mit dem gemeinsamen Anschlusspunkt (105) verbunden werden kann, so dass der Dieselgenerator (166) über die jeweiligen Schalter (121, 122, ...) mit jeder der Windturbinen (101, 102, ...) verbunden werden kann,
- wobei eine fest zugeordnete erste Windturbine (101) des Windparks (100) mit dem Dieselgenerator (166) durch das Schließen der jeweiligen Schalter (167 und 121) verbunden wird,
- wobei der Dieselgenerator (166) gestartet wird und eine vorgegebene Spannung über die geschlossenen jeweiligen Schalter (167 und 121) für den Transformator (161) der ersten Windturbine (101) bereitstellt,
- wobei die vorgegebene Spannung durch den Dieselgenerator (166) heruntergeregelt wird, so dass der Transformator (161) der ersten Windturbine (101) entmagnetisiert wird, bis eine bestimmte Entmagnetisierung des Transformators (161) erreicht ist,
- wobei diese Sequenz des Entmagnetisierens mit den verbleibenden Transformatoren (162, 163, 164) der verbleibenden Windturbinen (102, 103, 104) über jeweiligen Schalter (122, 123, 124) wiederholt wird,
- wobei, nachdem die Entmagnetisierungssequenz der Transformatoren (161, 162, ...) angewendet wurde, eine Anlaufsequenz der Windturbinen (101, 102, ...) gemäß diesen Schritten gestartet wird:
- wobei die Schalter (167 und 121) zwischen dem Dieselgenerator (166) und dem Transformator (161) der fest zugeordneten ersten Windturbine (101) geschlossen sind, während die Schalter (122, 123, 124) zwischen dem Dieselgenerator (166) und den anderen Transformatoren (162, 163, 164) geöffnet sind,
- wobei die Spannung des Dieselgenerators (166) heruntergeregelt wird, bis ein Nennspannungswert erreicht ist,
- wobei der Dieselgenerator (166) über die jeweiligen Schalter (167, 121) mit der ersten Windturbine (101) verbunden ist, so dass sowohl der Umrichter (141) als auch die Zusatzeinrichtung (171) der ersten Windturbine (101) vom Dieselgenerator (166) mit Strom versorgt werden,
- wobei die erste Windturbine (101) gestartet und in Betrieb gesetzt wird, so dass eine bestimmte Menge elektrischen Stroms von der ersten Windturbine (101) erzeugt wird,
- wobei dieser erzeugte elektrische Strom genutzt wird, um andere Windturbinen (102, 103, 104) des Windparks (100) durch Schalten der jeweiligen Schalter (122, 123, 124) mit Strom zu versorgen.

2. Verfahren nach Anspruch 1, wobei eine jeweilige Anzahl von Windturbinen (101, 102, ...) eines Windparks (100) für die Startsequenz ausgewählt wird, die nach der Entmagnetisierung angewendet wird.

3. Verfahren nach Anspruch 1, wobei eine jeweilige Anzahl von Windturbinen (101, 102, ...) eines Windparks (100) für eine gemeinsame Entmagnetisierung der jeweiligen Windturbinen-Transformatoren (161, 162, ...) ausgewählt wird.

4. Verfahren nach Anspruch 1, wobei die Windturbine benutzt wird, um jeweilige Windturbinen (101, 102, ...) eines Windparks (100) in Betrieb zu setzen, so dass eine Verbindung der Windturbinen (101, 102, ...) zu einem Windpark-externen Stromnetz (109) eines Netzbetreibers vorbereitet wird.

## Revendications

1. Procédé de démarrage d'éoliennes (101, 102, ...), qui fonctionnent en mode îlot, d'un parc éolien (100),
- dans lequel chaque éolienne (101, 102, ...) est reliée par l'intermédiaire d'un commutateur respectif (121, 122, ...) à un point de connexion commune (105),
- dans lequel chaque éolienne (101, 102, ...) comprend en série un générateur (131, 132, ...) et un convertisseur (141, 142, ...), qui sont reliés par l'intermédiaire d'un commutateur (151, 152, ...) à un transformateur (161, 162, ...), et un équipement auxiliaire (171, 172, ...), qui est également relié au transformateur (161, 162, ...),
- dans lequel, pour le démarrage des éoliennes, un générateur diesel (166) peut être relié par l'intermédiaire d'un commutateur (167) au point de connexion commune (105) et dans lequel chaque éolienne (101, 102, ...) du parc éolien (100) peut être reliée par l'intermédiaire d'un commutateur respectif (121, 122, ...) au point de connexion commune (105), par conséquent le générateur diesel (166) peut être relié à chacune des éoliennes (101, 102, ...) par l'intermédiaire des commutateurs respectifs (121, 122, ...),
- dans lequel une première éolienne dédiée (101) du parc éolien (100) est reliée au générateur diesel (166) par fermeture des commutateurs respectifs (167 et 121),
- dans lequel le générateur diesel (166) est démarré et fournit une tension prédéfinie par l'intermédiaire des commutateurs respectifs fermés (167 et 121) au transformateur (161) de la première éolienne (101),
- dans lequel la tension prédéfinie est diminuée par le générateur diesel (166) par conséquent le transformateur (161) de la première éolienne (101) est démagnétisé jusqu'à atteindre une certaine démagnétisation du transformateur (161),
- dans lequel cette séquence de démagnétisation est répétée avec les transformateurs restants (162, 163, 164) des éoliennes restantes (102, 103, 104) par l'intermédiaire de commutateurs respectifs (122, 123, 124),
- dans lequel, après l'application de la séquence de démagnétisation des transformateurs (161, 162, ...), une séquence de démarrage des éoliennes (101, 102, ...) est commencée conformément à ces étapes :
- dans lesquelles les commutateurs (167 et 121) entre le générateur diesel (166) et le transformateur (161) de la première éolienne dédiée (101) sont fermés tandis que les commutateurs (122, 123, 124) entre le générateur diesel (166) et les autres transformateurs (162, 163, 164) sont ouverts,
- dans lesquelles la tension du générateur diesel (166) est augmentée jusqu'à atteindre une valeur de tension nominale,
- dans lesquelles le générateur diesel (166) est relié par l'intermédiaire des commutateurs respectifs (167, 121) à la première éolienne (101), par conséquent le convertisseur (141) ainsi que l'équipement auxiliaire (171) de la première éolienne (101) sont alimentés par le générateur diesel (166),
- dans lesquelles la première éolienne (101) est démarrée et fonctionne, par conséquent une certaine quantité de puissance électrique est générée par la première éolienne (101),
- dans lesquelles cette puissance électrique générée est utilisée pour alimenter d'autres éoliennes (102, 103, 104) du parc éolien (100) par commutation des commutateurs respectifs (122, 123, 124).

2. Procédé selon la revendication 1, dans lequel un nombre respectif d'éoliennes (101, 102, ...) d'un parc éolien (100) est sélectionné pour la séquence de démarrage, qui est appliquée après la démagnétisation.

3. Procédé selon la revendication 1, dans lequel un nombre respectif d'éoliennes (101, 102, ...) d'un parc éolien (100) est sélectionné pour une démagnétisation conjointe des transformateurs d'éoliennes respectifs (161, 162, ...) .

4. Procédé selon la revendication 1, dans lequel l'éolienne est utilisée pour mettre en fonctionnement des éoliennes respectives (101, 102, ...) d'un parc éolien (100) par conséquent une connexion des éoliennes (101, 102, ...) à un réseau électrique (109) extérieur au parc éolien d'un opérateur de réseau est préparée.
